# EUROPEAN PATENT APPLICATION

(11) **EP 1 457 751 A1**
(43) Date of publication of application: **15.09.2004**
(21) Application number: 03025998.0
(22) Date of filing: 14.11.2003
(51) Int. Cl.: F28F 1/16

(54) **Heat exchanger and fabrication method thereof**

(30) Priority: 13.03.2003 KR 2003015824
(71) Applicant: LG ELECTRONICS INC., Seoul (KR)
(72) Inventor: Cho, Nam Soo, Dongjak-Gu Seoul (KR); Lee, Jang Seok, Bupyeong-Gu Incheon (KR); Jhee, Sung, Bundang-Gu Seongnam Gyeonggi-Do (KR)
(74) Representative: COHAUSZ & FLORACK

(57) **Abstract**

A heat exchanger includes: refrigerator pipes arranged at regular intervals; and cooling pins arranged between the refrigerator pipes and integrally formed with the refrigerator pipes. A fabrication process and cost can be reduced, a heat transfer performance can be enhanced, and the life span of the heat exchanger can be lengthened.

## Description

### BACKGROUND OF THE INVENTION

### 1. Field of the Invention

The present invention relates to a heat exchanger and its fabrication method, and more particularly, to a heat exchanger and its fabrication method capable of reducing a fabrication process and improving a heat exchange performance by integrally forming a refrigerant pipe and a cooling fin.

### 2. Description of the Background Art

In general, a heat exchanger is a device for heat-exchanging by making two different fluids contact each other directly or indirectly, and commonly used for a heater, a cooler, an evaporator, a condenser and the like.

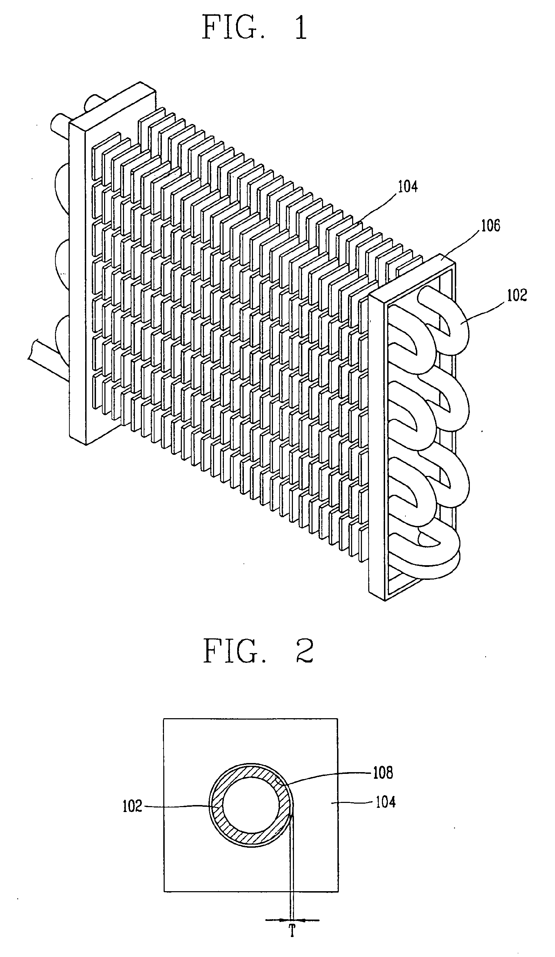

Figure 1 is a perspective view of a fin and tube type heat exchanger mainly used for the evaporator of a refrigerator in accordance with a conventional art.

The conventional heat exchanger includes a refrigerant pipe 102 performing a heat exchanging operation while a refrigerant passes therethrough, a plurality of cooling fins 104 mounted at the refrigerant pipe 102 at regular intervals and extending a contact area of air passing between the refrigerant pipes 102 in order to enhance a heat transfer performance, and a support holder 106 mounted at both sides of the refrigerant pipe 102 and supporting the refrigerant pipe 102.

The refrigerant pipe 102 is formed such that a cooper pipe is repeatedly bent, and as shown in Figure 2, the cooling fin 104 is formed in a flat type with a through hole 108 so as to be inserted in an outer circumference of the refrigerant pipe 102, and made of an aluminum material.

A method for fabricating the conventional heat exchanger is that the refrigerant pipe 102 is extruded, the cooling fins 104 are blanked and inserted to the refrigerant pipe 102, and then an tube-expanding process is performed to expand a diameter of the refrigerant pipe 102, whereby the cooling pins 104 are fixed at the outer circumference of the refrigerant pipe 102.

However, the conventional heat exchanger has the following problems.

That is, because the refrigerant pipe 102 and the cooling pins 104 are processed through separate processes and then the cooling pins 104 are combined to the refrigerant pipe 102, the fabrication process is complicate and thus a fabrication cost increases.

In addition, because the cooling fin 104 is inserted at the outer circumference of the refrigerant pipe 102, a gap (T) exists between the refrigerant pipe 102 and the cooling pin 104, causing degradation of a heat transfer performance.

Especially, when the heat exchanger is used for a freezing device, a freezing phenomenon is generated at the refrigerant pipe 102 and the cooling pin 104 due to condensate water, and a defrosting is performed by using a defrosting heater. At this time, as the freezing and defrosting are repeatedly performed at the gap (T) between the refrigerant pipe 102 and the cooling pin 104, the gap (T) widens, and thus, the heat transfer performance is more degraded.

In addition, because the refrigerant pipe 102 and the cooling fin 104 are made of copper and aluminum, potential difference corrosion is generated due to a potential difference between the two materials, which causes shortening of the life span of the heat exchanger.

### SUMMARY OF THE INVENTION

Therefore, an object of the present invention is to provide a heat exchanger and its fabrication method capable of shortening a fabrication process and reducing a fabrication cost by integrally forming a refrigerant pipe and cooling fins.

Another object of the present invention is to provide a heat exchanger and its fabrication method capable of enhancing a heat transfer performance and lengthening the life span of a heat exchanger by integrally forming a refrigerator pipe and cooling pins in the same material.

To achieve these and other advantages and in accordance with the purpose of the present invention, as embodied and broadly described herein, there is provided a heat exchanger including: refrigerator pipes arranged at regular intervals; and cooling pins arranged between the refrigerator pipes and integrally formed with the refrigerator pipes; and a support holder disposed at both sides of the refrigerator pipes and supporting the refrigerator pipes.

The refrigerant pipe and the cooling fin are made of an aluminum material.

Regarding the refrigerant pipes, two refrigerant pipes are arranged at a certain interval and repeatedly bent, respectively.

The cooling fins are formed in a direction of a right angle to a longitudinal direction of the refrigerant pipe between the refrigerants and has a certain tilt angle.

To achieve the above objects, there is also provided a method for fabricating a heat exchanger including: a first step of integrally forming refrigerant pipes and a flat type cooling fin forming part between the refrigerant pipes; a second step of forming a plurality of cooling fins at the cooling fin forming part; a third step of bending the cooling fin-formed refrigerant pipe several times at certain intervals; and a fourth step of assembling a support holder at both sides of the refrigerant pipe.

In the first step, two refrigerant pipes and the flat type cooling fin forming part between the two refrigerant pipes are integrally formed by using a molding unit.

In the second step, the plural cooling fins are formed with a certain tile angle by passing the cooling fin forming part between louvering gears.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a perspective view of a heat exchanger in accordance with a conventional art;
Figure 2 is a partial sectional view of the heat exchanger in accordance with the conventional art;
Figure 3 is a perspective view showing a heat exchanger in accordance with the present invention;
Figure 4 is an enlarged view of a portion 'A' of Figure 3;
Figure 5 is a partial front view of the heat exchanger in accordance with the present invention;
Figure 6 is a partial sectional view of the heat exchanger in accordance with the present invention;
Figures 7 through 10 are sequential perspective views showing a fabrication process of the heat exchanger in accordance with the present invention; and
Figures 11, 12A and 12B are graphs comparatively showing performances of the conventional heat exchanger and the heat exchanger in accordance with the present invention.

### DETAILED DESCRIPTION OF THE PREFERRED EMBODIMENTS

Reference will now be made in detail to the preferred embodiments of the present invention, examples of which are illustrated in the accompanying drawings.

There can be plural embodiments of a heat exchanger and its fabrication method in accordance with the present invention, of which the most preferred one will now be described.

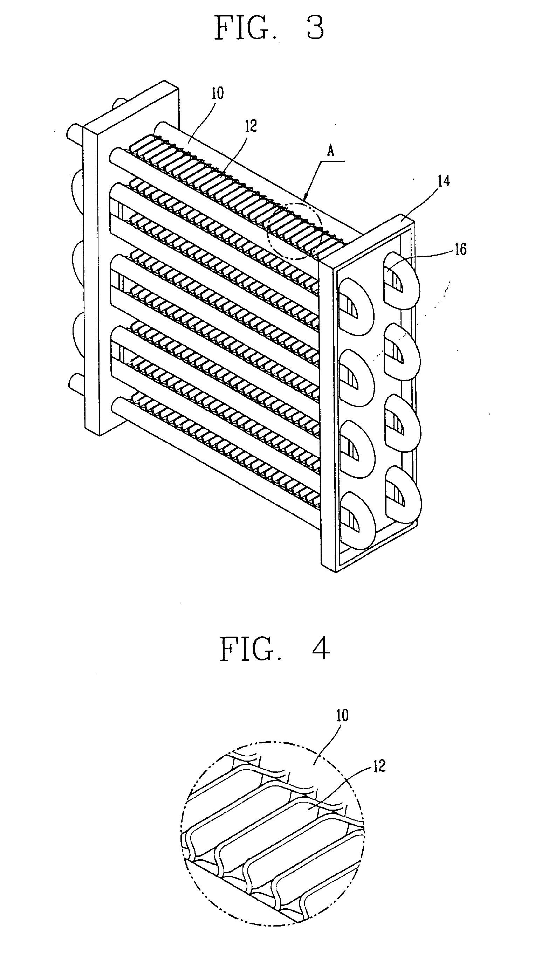

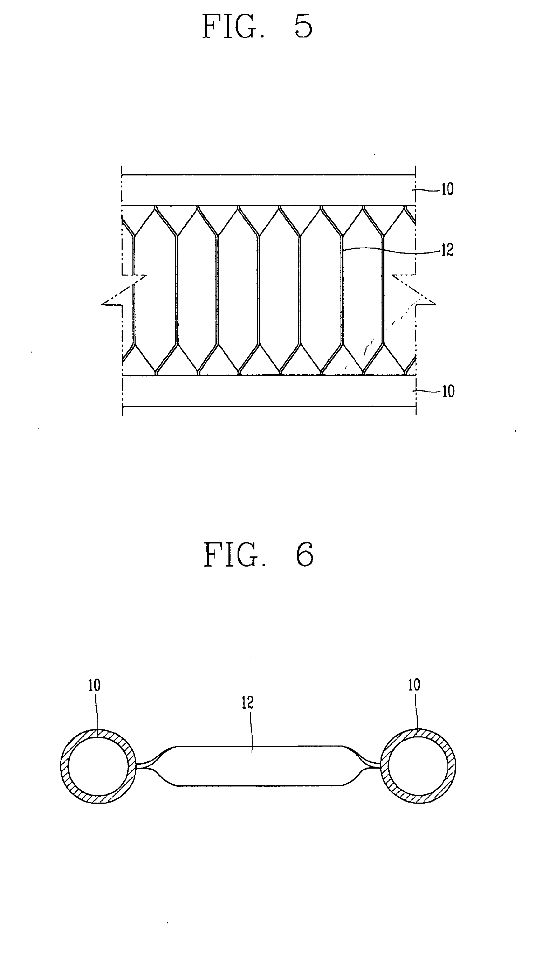

Figure 3 is a perspective view showing a heat exchanger, Figure 4 is an enlarged view of a portion 'A' of Figure 3, Figure 5 is a partial front view of the heat exchanger, and Figure 6 is a partial sectional view of the heat exchanger in accordance with the present invention.

The heat exchanger of the present invention is featured in that refrigerant pipes 10 through which a refrigerant passes are arranged at a certain interval and cooling fins 12 are integrally formed between the refrigerant pipes 10 to enhance a heat transfer performance by enlarging a contact area to air which passes between the refrigerant pipes 10. In addition, a support holder 14 is disposed at both sides of the refrigerant pipes 10 in order to support the heat exchanger.

The refrigerant pipes 10 are arranged at certain intervals in such a tube type that the refrigerant can pass through, and the cooling fins 12 are integrally formed in the same material as that of the refrigerant pipe 10 between the refrigerant pipes 10. Regarding the refrigerant pipe, plural ones may be arranged, and preferably, two refrigerant pipes 10 are constructed as a pair and the cooling fins 12 are formed therebetween.

The refrigerant pipe 10 are bent several times at certain intervals according to a size of a space where the refrigerant pipes are installed, and as the air for performing a cooling operation passes between the refrigerant pipes 10 and the cooling fins 12, heat is exchanged.

The cooling fins 12 are arranged at certain intervals in a direction of a right angle to an axis between the refrigerant pipes 10, and in order to smoothly discharge condensate water and for a smooth contact with air, the cooling fins 12 are formed at a certain tilt angle.

The support holder 14 includes a plurality of slots 16 into which portions of the refrigerant pipes 10 are inserted. Cooling fins existing at both end portions of the refrigerant pipes 10 are removed so that the end portions of the refrigerant pipes 10 can be inserted into the slots of the support holder 14.

A method for fabricating the heat exchanger will now be described in detail.

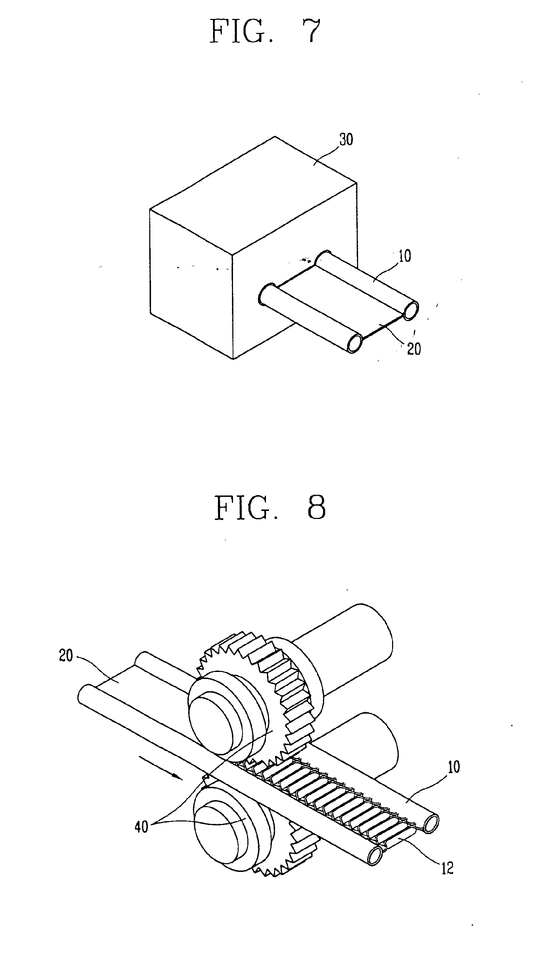

To begin with, as shown in Figure 7, a cooling fin forming part 20 for integrally forming the refrigerant pipe 10 and the cooling fin 14 is formed. That is, the flat type cooling fin forming part 20 having two refrigerant pipes 10 and a certain thickness is formed by using a molding unit 30.

Next, as shown in Figure 8, the cooling fins 14 are formed at the cooling fin forming part 20. That is, when the cooling fin forming part 20 passes between engaged louvering gears 40, the cooling fin forming part 20 is punched at certain intervals by the louvering gears 40, to thereby form plural cooling fins 12.

At this time, the tilt angle of the cooling fin 12 differs depending on a tooth angle of the louvering gear 40. Thus, a desired tile angle of the cooling fin 12 can be obtained by controlling the tooth angle of the louvering gear 40.

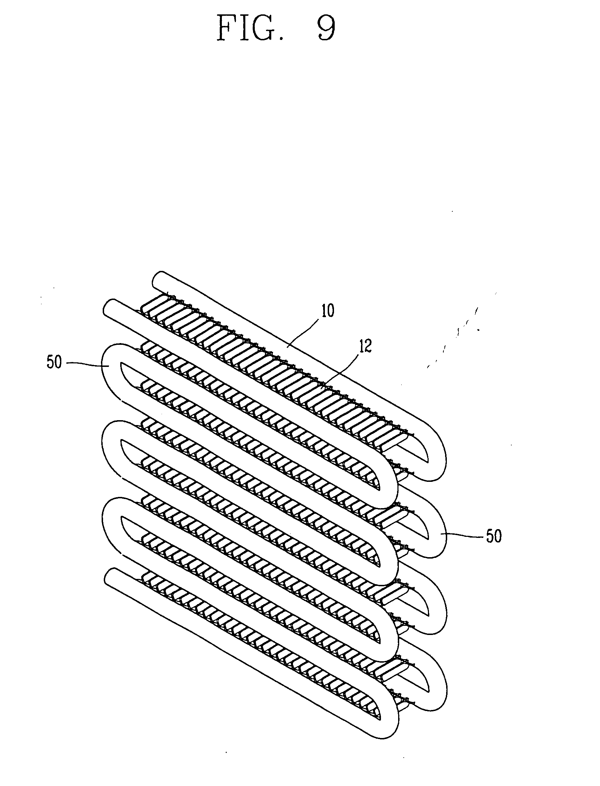

And then, as shown in Figure 9, the cooling fin-formed refrigerant pipes 10 are bent several times at certain intervals.

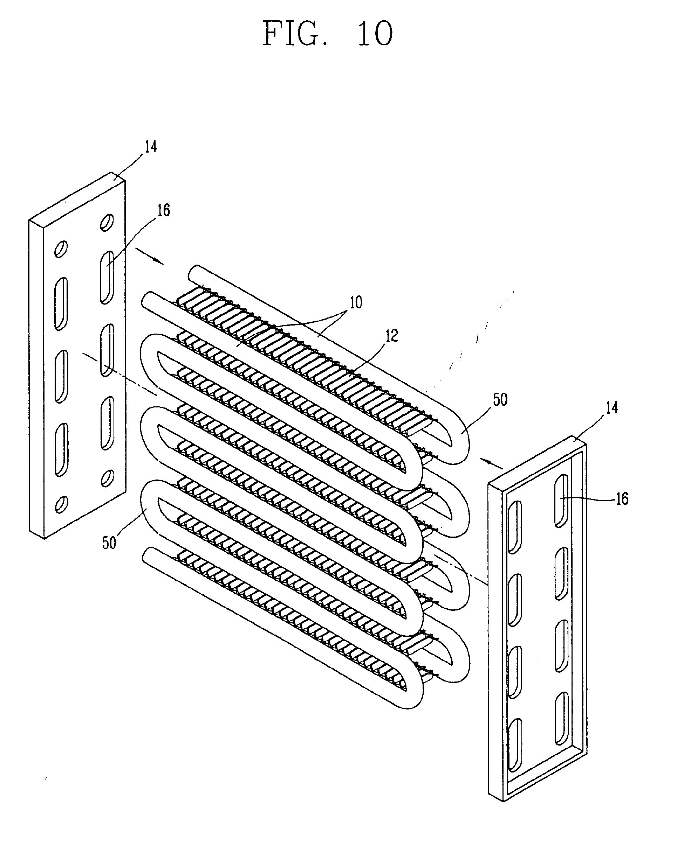

And as shown in Figure 10, the support holder 14 is assembled at both sides of the bent refrigerant pipes 10, thereby completing fabrication of the heat exchange. At this time, cooling fins existing at both end portions 50 of the refrigerant pipes 10 are removed so that the both end portions can be inserted into the slots 16 formed at the support holder 14.

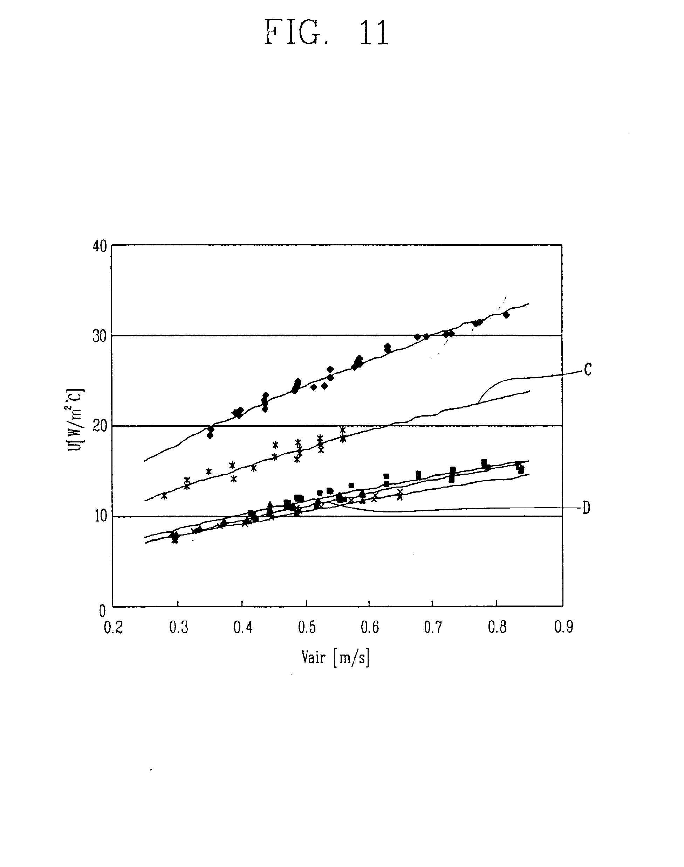

Figure 11 is a graph comparatively showing performances of the conventional heat exchanger and the heat exchanger in accordance with the present invention.

With reference to Figure 11, the more a heat transfer coefficient (U) according to the speed of a flow of introduced air is, the better the heat transfer performance. Thus, as noted in Figure 11, a graph (C) indicating a heat transfer coefficient value of the present invention is greater than a graph (D) indicating a heat transfer coefficient value of the conventional art, so that the heat exchanger of the present invention has an excellent heat transfer performance compared to that of the conventional art.

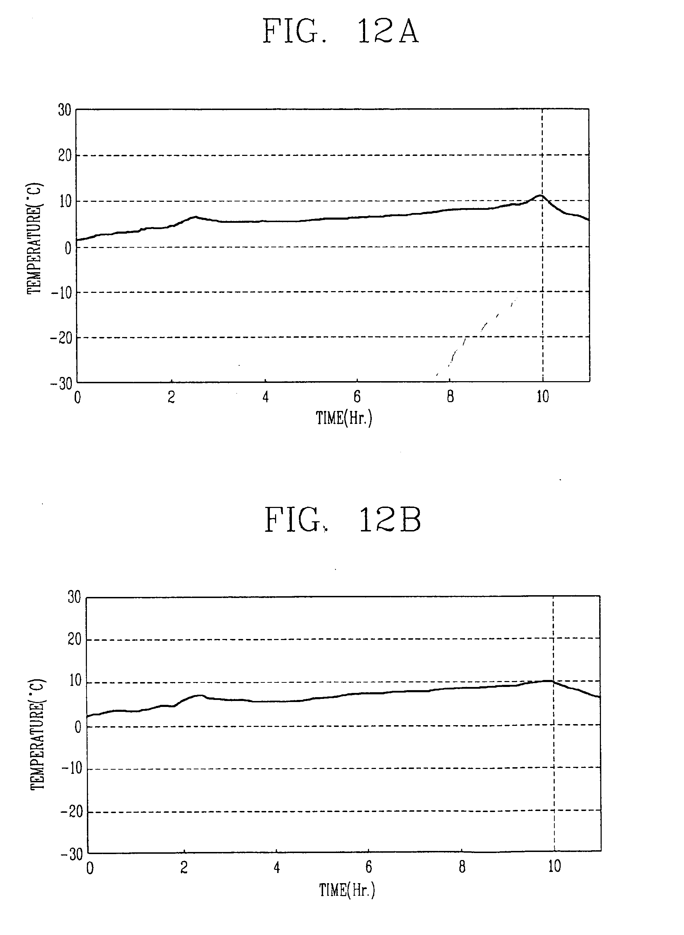

Figure 12A and 12B are graph comparatively showing internal temperatures of a refrigerator when a door of the refrigerator is opened and closed in both cases where the heat exchanger of the present invention is installed in the refrigerator and the heat exchanger of the conventional art is installed in the refrigerator.

As shown in the Figure 12A, when 10 hours elapsed after a testing started, an internal temperature of the refrigerator in which the conventional heat exchange was installed was 10.5°C, whereas as shown in the Figure 12B, an internal temperature of the refrigerator in which the heat exchanger of the present invention was installed was 9.8°C. Therefore, it is noted that the heat transfer performance of the heat exchanger of the present invention is excellent compared to that of the conventional heat exchanger.

As so far described, the heat exchanger and its fabrication method of the present invention have the following advantages.

For example, first, because the refrigerant pipes and the cooling fin forming part are integrally formed and then the cooling fins are formed, the fabrication process of the heat exchanger can be reduced, and its fabrication cost can be also reduced.

Second, because the refrigerant pipes and the cooling fins are integrally formed, the heat exchange performance between the refrigerant passing between the refrigerant pipes and the air passing between the cooling fins can be enhanced.

Third, because the refrigerant pipe and the cooling pins are made of the same material, a potential difference corrosion that may be generated between different materials can be prevented, leakage of the refrigerant can be prevented, and the life span of the heat exchanger can be lengthened.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A heat exchanger comprising:
refrigerator pipes arranged at regular intervals; and
cooling pins arranged between the refrigerator pipes and integrally formed with the refrigerator pipes.

2. The heat exchanger of claim 1, wherein a support holder supporting the refrigerator pipes is disposed at both sides of the refrigerator pipes.

3. The heat exchanger of claim 1, wherein the refrigerant pipe and the cooling fin are made of an aluminum material.

4. The heat exchanger of claim 1, wherein, regarding the refrigerant pipes, two refrigerant pipes are arranged at a certain interval and repeatedly bent, respectively.

5. The heat exchanger of claim 1, wherein the cooling fins are formed in a direction of a right angle to a longitudinal direction of the refrigerant pipe between the refrigerants and has a certain tilt angle.

6. The heat exchanger of claim 2, wherein there is no cooling fin at a portion of the refrigerant pipe inserted into a slot of the support holder.

7. A method for fabricating a heat exchanger comprising:
a first step of integrally forming refrigerant pipes and a flat type cooling fin forming part between the refrigerant pipes;
a second step of forming a plurality of cooling fins at the cooling fin forming part;
a third step of bending the cooling fin-formed refrigerant pipe several times at certain intervals; and
a fourth step of assembling a support holder at both sides of the refrigerant pipe.

8. The method of claim 7, wherein, in the first step, two refrigerant pipes and the flat type cooling fin forming part between the two refrigerant pipes are integrally formed by using a molding unit.

9. The method of claim 7, wherein, in the second step, the plural cooling fins are formed with a certain tile angle by passing the cooling fin forming part between louvering gears.

10. The method of claim 7 further comprising:
removing cooing fins formed at both sides of the refrigerant pipe so that the refrigerant pipe can be inserted into a slot of the support holder after the refrigerant pipe is bent.
